# EUROPEAN PATENT SPECIFICATION

(11) **EP 3 519 710 B1**
(45) Date of publication and mention of the grant of the patent: **26.08.2020**
(21) Application number: 17787638.0
(22) Date of filing: 28.09.2017
(51) Int. Cl.: F16C 17/18, F16C 17/08, F16C 23/04, F16C 32/06, F16C 21/00, F16C 39/02

(54) **VERTICAL SUPPORT DEVICE WITH REDUCED ENERGY DISSIPATION FOR ROTATING SHAFTS**
AXIALLAGER FÜR VERTICAL ROTIERENDE WELLE MIT VERRINGERTEM ENERGIEVERBRAUCH
DISPOSITIF DE SUPPORT VERTICAL POUR ARBRE ROTATIF VERTICAL AVEC UNE DISSIPATION D'ÉNERGIE RÉDUITE

(30) Priority: 29.09.2016 IT 201600097794
(43) Date of publication of application: 07.08.2019
(73) Proprietor: Genius Energy S.r.l, 25128 Brescia (IT)
(72) Inventor: STUCCHI, Angelo, 20874 Busnago (MB) (IT); GALBUSERA, Emanuele, 20882 Bellusco (MB) (IT)
(74) Representative: Branca, Emanuela
(86) International application number: PCT/IB2017/055949
(87) International publication number: WO 2018/060910

(56) References cited:
- JP-U- S55 115 432
- US-A- 3 672 733
- US-A- 4 218 023
- US-A1- 2010 155 512

## Description

The present invention relates to a vertical support device with reduced energy dissipation for rotating shafts.

In the construction of machines with rotating shafts the problems relative to supports have been tackled and solved over the years with satisfactory technological solutions.

The classical sliding and rolling systems have recently been added to by active magnetic bearing systems for high speeds and with the absence of contact between fixed parts and mobile parts.

In applications from directional gyroscopes to large power turbines a vast range of supports have been designed and built, which offer the best performance in certain operating conditions.

US 2010/155512 A1 discloses a vertical support device for a gyratory crusher for transferring mainly vertical loads from a crusher head to a piston limiting the axial stresses. A vertical shaft of the crusher is supported on a thrust bearing made up of three horizontal bearing plates. The first bearing plate has a convex underside and is attached to the vertical shaft. The second bearing plate is attached to the piston arranged vertically below the vertical shaft. The third bearing plate has a concave upper side and is slidably and rotatably arranged between the first bearing plate and the second bearing plate. Further a cooling circuit is provided to cool the bearings of the crusher.

However, in the specific case of strong axial loads, in particular of the order of tens of tons, and in the speed range between 100 and 3000 rpm, with the inevitable passage over the resonant frequencies of the rotor, systems characterised by extremely low energy dispersion (a few hundred watts) with low manufacturing and operating costs are not currently available.

Moreover, conventional hydrostatic supports are considered by the official scientific literature and from experience unsuitable for supporting eccentric and unbalanced loads.

The aim of the present invention is to provide a vertical support device of the hydrostatic type with reduced energy dissipation for rotating shafts, which solves the problems of the supports currently used.

Another aim of the present invention is to provide a vertical support device with reduced energy dissipation for rotating shafts capable of hydrostatically supporting vertical loads with strong eccentricities, dynamic and vibrational imbalances without altering the oil separating film.

Another aim of the present invention is to provide a vertical support device with reduced energy dissipation for rotating shafts that is particularly simple and functional, with low costs.

These aims according to the present invention are achieved by providing a vertical support device with reduced energy dissipation for rotating shafts as outlined in claim 1.

Further characteristics are highlighted in the dependent claims.

The characteristics and advantages of a vertical support device with reduced energy dissipation for rotating shafts according to the present invention will become clearer from the following description, given as an example and not for limiting purposes, referring to the attached schematic drawings, in which:
figure 1 is a side elevation view of a vertical support device with reduced energy dissipation for rotating shafts according to the present invention, shown coupled with a rotating shaft;
figure 2 is a sectional view of figure 1 taken according to the plane line II-II;
figures 3A and 3B respectively show a plan view and a section according to the plane III-III of figure 3A of the bearing track of the device of figure 1;
figures 4A and 4B respectively show a plan view and a section according to the plane IV-IV of figure 4A of the magnetic ring of a preferred embodiment of the device of figure 1;
figures 5A and 5B and 5C respectively show a plan view from above, a section according to the plane V-V of figure 5A and a plan view from below of the rotating and floating plate of a preferred embodiment of the device of figure 1;
figures 6A and 6B respectively show a plan view and a section according to the plane VI-VI of figure 6A of the hemispherical cap forming part of the rotating and floating plate of a preferred embodiment of the device of figure 1;
figures 7-9 show different examples of free descent diagrams of accumulators, expressed as speed reduction (rpm) over time (hours), supported by the device according to the present invention.

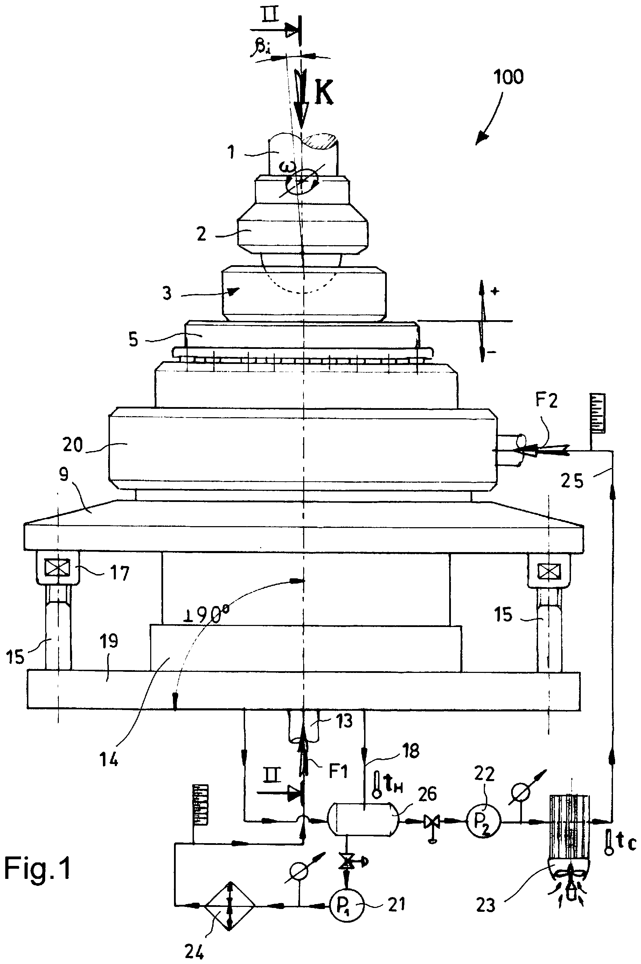

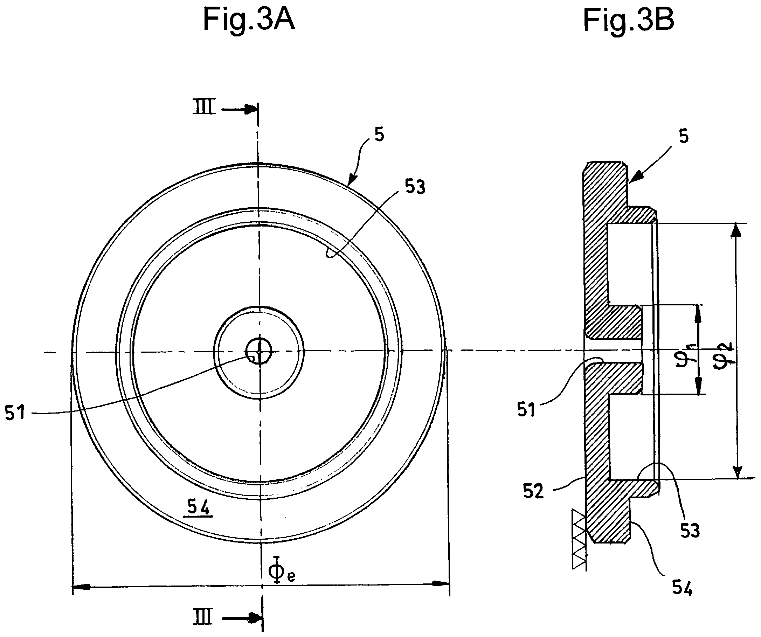

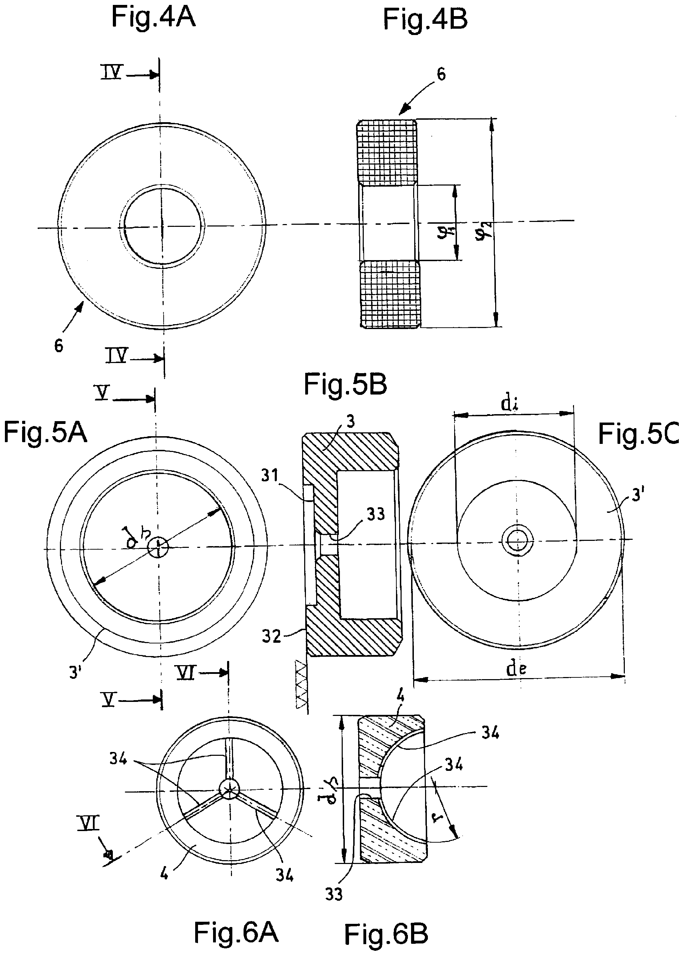

With reference to figures 1-6, a vertical support device with reduced energy dissipation for rotating shafts is shown, wholly indicated with 100, which has been designed, built and tested at length by the Applicant.

Figure 1 shows the device 100 object of the present invention as a whole, in which a vertical load K is transmitted from a shaft 1, rotating with an angular speed ω, to a spherical end portion 2, rigidly constrained, for example keyed, to the shaft 1.

The support device 100 comprises a rotating and floating plate 3, which comprises a hemispherical cap 4, identifying a complementary concave seat for the spherical end portion 2. From the spherical end portion 2 the load K is transmitted to the rotating and floating plate 3.

A bearing track 5 is associated on top with the plate 3 and at the bottom with a hollow housing body 9 of the support device, which receives a manifold 20 of the hydraulic circuit. The housing body 9 is connected to a base plate 19 of the support device through a plurality of adjustment screws 15, bearing nuts 17 at their ends, equipped with a hemispherical end portion 10, arranged equally spaced from one another in a number between 3 and 6. The base plate 19, on which all of the vertical stresses discharge, is in turn rigidly connected to a fixed frame, not shown. The adjustment screws 15 with nuts having hemispherical end portion 17 ensure that perpendicularity is maintained between the housing body 9 and the base plate 19 of the support device and micrometric adjustment thereof. The housing body 9, internally hollow, can also rest on a centring ring 14, constrained to the base plate 19.

Figure 1 also illustrates the scheme of the hydraulic circuit, which performs the dual function of bearing the vertical load K, which can be very high, in other words exceeding 60 tons, and of cooling the bearing track 5.

A high-pressure pump P₁, indicated with reference numeral 21, draws oil from a tank 26, said oil being at the temperature t_{H}, and sends it to an oil cooling/heating device 24, which takes the oil to an operating temperature comprised between a minimum temperature of 35°C and a maximum temperature of 55°C. Depending on the drawing temperature t_{H} from the tank 26, the oil cooling/heating device 24 takes care of cooling or heating to obtain the operating temperature. The oil at the operating temperature is introduced at high pressure into the housing body 9 through a delivery pipe 13 from the bottom towards the top in the vertical direction according to the arrow F1.

A low pressure pump P₂, indicated with reference numeral 22, also draws oil from the tank 26 and sends it to the ventilated air exchange cooling device 23. Through a delivery circuit 25, the low pressure pump feeds the cooling circuit connected to a manifold 20, with a flow of oil at an average temperature tc of 35°C directed inside the housing body 9 according to the arrow F2 and conveyed towards the bearing track 5 through a plurality of channels 91 radially arranged in the housing body 9 towards the track 5, which give rise to as many jets of oil.

The return oil goes back into the storage tank 26 through the return circuit 18, comprising outlet ducts arranged on the bottom of the housing body 9.

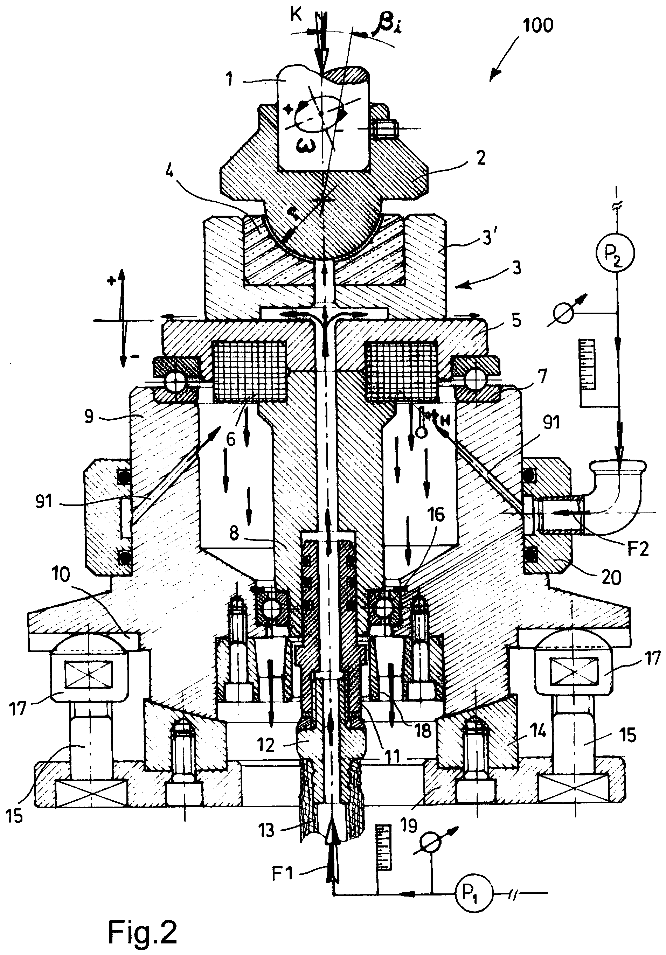

Figure 2, which shows a preferred embodiment of the support device 100 of the invention, illustrates the section of the device made along a vertical plane passing through the axis of the shaft 1, from which the internal arrangement of the different parts that make the hydrostatic support and the mechanical safety support is highlighted.

The housing body 9 contains a shaft 8 inside it, centred coaxially through rolling bearings, preferably lubricated by the low-pressure pump 22. The shaft 8 is axially perforated and connected at the lower end to a delivery pipe 13 of the pressurised oil and at the upper end to the bearing track 5.

According to this preferred embodiment, the support device 100 according to the invention uses magnetic oil, for example of the Magnatec ® type, comprising molecules with dipolar charge adapted to be suitably oriented by the magnetic fields applied for better control of the oil separating film between the conjugated tracks through the formation of microstratification.

The spherical end portion 2, adapted to be rigidly constrained to the vertical shaft 1, has an end portion, opposite to the shaft 1, of hemispherical shape having radius r.

The rotating and spherical plate 3 comprises a body 3' having outer diameter *dₑ* bearing, on the lower contact surface with the bearing track 5, a shallow cavity 31 having diameter *dᵢ* that determines the area of a rotation surface 32, made of the circular crown identified between the outer and inner diameters of the body of the plate 3 (*dₑ* and *dᵢ*)*,* rectified through fine lapping.

On the opposite side, the rotating and floating plate 3 bears a hemispherical cap 4 having radius r, adapted to be coupled with the relative portion of the spherical end portion 2.

According to the invention, the figures show a radius of curvature r of the hemispherical cap 4 of the plate 3 smaller than the maximum radius of the plate 3, in other words dₑ/2, preferably roughly equal to half the maximum radius dₑ/2 of the plate 3.

With this configuration, the spherical end portion 2 fixedly connected to the shaft 1 is able to orientate with respect to the plate 3 with a spherical angle βᵢ up to +/-5°, in general 1°-2°. This allows the continuous self-adaptation between the conjugated tracks, with consequent constant maintaining of the oil separating film, which is a condition for the low energy dispersion of the system.

The rotating and floating plate 3 is equipped with an axial hole 33 having circular cross-section passing through the body 3' and the hemispherical cap 4 for the passage of the pressurised lubricating oil. The ratio between the diameter of the spherical cap 4 and the diameter of the axial hole 33 determines the stabilisation of maintaining the load for a specific operating pressure of the support device 100.

The surface of the hemispherical cap 4, adapted to be coupled with the spherical end portion 2, is also provided with radial channels 34 for the passage and containment of pressurised lubrication oil, arranged equally spaced from one another in a number generally comprised between 3 and 6. The radial channels 34 present on the cap 4 allow the uniform distribution of the oil separating film between the conjugated parts of the spherical coupling with the dual function of support and uniform lubrication.

According to a preferred embodiment of the invention, the rotating and floating plate 3 comprises the body 3' and the hemispherical cap 4 made in two distinct parts of different material, stably coupled to one another on a diameter dₛ.

Indeed, the hemispherical cap 4 of the plate 3 must be made of a non-magnetic material having high hardness, capable of supporting high loads on small sections, like for example a bronze alloy. The body 3' of the plate 3, on the other hand, must be made of anti-friction magnetic material for the formation of a tribological pair having low friction between the conjugated tracks. Such a material can be softer than the material selected for the hemispherical cap 4.

The bearing track 5 has an outer diameter Φₑ and a central through hole 51, in the example substantially having the same diameter as the through hole 33 of the plate 3.

The lower surface 52 of the bearing track 5, arranged in contact with the rotating and floating plate 3, is rectified through fine lapping, whereas the opposite surface bears an annular seat 53 between the outer ϕ₂ and inner ϕ₁ diameters that receives a magnetic ring 6, having outer diameter ϕ₂ and inner diameter ϕ₁. The lower surface of the track 5 also bears a perimeter annular seat 54 for housing axial rolling bearings 7.

The magnetic ring 6 is made of neodymium ceramics having intense permanent magnetic field, capable of transmitting the lines of the flux through the bearing track 5 to maintain the adherence of the separating film on the track 5. The magnetic ring 6 is coaxially centred in a suitable seat of the upper end of the shaft 8.

The conjugated rotation tracks, made of the surface 32 of the plate 3 and the surface 52 of the bearing track 5, are respectively manufactured according to the invention in superalloys with sintering and so-called "mechanical alloying" technologies.

In particular, the body 3' of the rotating and floating plate 3 is made with sintering technologies, wherein the powders of suitable grain size are dosed and then compressed in high-temperature moulds. The best results for the wide operating range of the support device 100 are obtained through an alloy preferably having the following composition by weight: 64% Copper, 16% Tin, 12% Cadmium and 8% Nickel.

Indeed, the body 3' of the plate 3, having to perform the dual function of counter-balancing the vertical load K and of supporting the pressurised oil separating film, must possess excellent characteristics both as anti-friction bearing and high mechanical toughness to withstand the compression, shearing and cyclical fatigue forces.

The bearing track 5 is made of a superalloy manufactured with the specific so-called "mechanical alloying" technology. The optimal composition comprises: 65% Iron, 18% Cobalt, 10% Chromium, 4% Silicon, 3% Tungsten and has exceptional properties for transmitting the magnetic field generated by the ring 6 with low dispersion.

The structure of the track 5 has qualities of mechanical toughness, fine rectification processability and rigidity associated with characteristics of formation of a tribological pair having low friction with the plate 3.

The hemispherical cap 4 is manufactured in binary bronze alloy having high tin content, in particular containing between 12% and 16% tin, to have hardness, rigidity and high load capacity.

When the operation of the support device 100 starts, in other words at the time of the first lifting of the vertical load K, the presence of the shallow cavity 31 creates the first lifting of the load K and allows the formation of an oil separating film of thickness of the order of hundredths of a millimetre between the conjugated tracks of the plate 3 and of the track 5, as well as between the hemispherical cap 4 and the spherical end portion 2.

The through hole 33 through the plate 3 ensures the hydrostatic bearing of the vertical load K, whereas the radial channels 34 of the hemispherical cap 4 ensure lubrication.

When the bearing of the first load K begins, the area of the inner surface of the shallow cavity 31 is pushed by the pressurised oil, for example with an initial lifting pressure comprised between 50 and 500 bars, from the high-pressure pump 21, capable of counter-balancing the intensity of the vertical load K.

At normal operating speed, the maintaining of the hydrostatic lifting with oil separating film is given by the pressure able to be determined by the area of the rotation surface 32 to counter-balance the load K.

As a result, the ratio between the diameter of the cavity 31 and the outer diameter *dₑ* of the plate 3 determines the value of the delivery pressure of the pump for every given load K to be supported.

For this purpose the ratio between the outer diameter of the plate and the diameter of the shallow cavity (*dₑ*/*dᵢ*) is preferably comprised in the range between 1.5 and 2.

At normal operating speed, the magnetic field present on the surface of the bearing track 5 is capable of orienting the molecules having dipolar charge present in the component of the magnetic oil, so as to create an oil separating film between the conjugated tracks with the formation of a microstratification between the plane 52 and the plate 3.

From the formation of this microstratification an extremely low dynamic friction is caused in the rotary movement between the parts, with consequent extremely low global energy dispersion, allowing the support device to support loads of many tons with very low thicknesses of separating film with respect to the use of a conventional hydraulic oil.

In the operative conditions of continuous self-orientation of the conjugated tracks the centesimal thickness of the oil separating film, in particular comprised between 60 and 180 microns, remains strictly constant.

By virtue of the special composition with poly-magnetic molecules of the oil and the geometric configuration of the hydrostatic bearing, the lifting of the load K on the pressurised oil separating film is allowed. Through the use of the support device 100 according to the invention it is possible to support loads K of many tons rotating at thousands of revolutions per minute with extremely low energy dispersion of only a few hundred Watts.

The high-pressure pump of the feed oil 21 sends the pressurised oil through the hollow shaft 8, to send it to the hydrostatic bearing between the conjugated tracks of the plate 3 and of the bearing track 5, which counter-balance the vertical load K through an oil separating film. In the periphery of the tracks, the oil undergoes a heating that would deteriorate the characteristics thereof, for example viscosity, in the absence of a suitable cooling circuit. An increase in viscosity would indeed determine the need to increase the flow rate and consequently the power of the pump with consequent worsening of energy consumption.

In normal operating conditions, i.e. with bearing through the oil separating film between the tracks, the shaft 8 is stationary and behaves like a normal oil pipe.

In the case of possible anomalies, like for example seizure or insufficient oil delivery pressure of the high-pressure pump 21, for example due to failure or malfunction of the pump 21, between the conjugated tracks of the plate 3 and of the bearing track 5 there is no longer the condition of hydrostatic bearing of the load and they behave as if they were a single body and thus transmit the rotary motion of the shaft 1 through the axial thrust bearing 7, housed on the bearing track 5. Therefore, the shaft 8 rotates and, to allow the delivery pipe 13 to be static, there must be an axial clearance between the parts. Between the shaft 8 and the delivery pipe 13 a connection element 11 and a sleeve 12 are arranged with axial clearance and at the same time the pressure seal is carried out through gaskets arranged in series with rings of the O-ring type or lip seals.

In order to avoid the shaft 8 to oscillate, it is housed in the hollow body 9 at the lower end with the radial rolling bearing 16, which ensures the perfect perpendicularity of the rolling system. The axial 7 and radial 16 rolling bearings constitute an integral auxiliary load bearing system with safety function in the case in which there is no pressure in the oil delivery circuit or in the case of failures between the hydrostatic bearing tracks. The condition of rotation on rolling bearings is extremely penalised both in terms of energy dissipation and in terms of the durability that cancel out the essential characteristics of the hydrostatic suspension support device object of the present invention, but constitutes a valid and simple safety system in the case of failures between the conjugated tracks of the plate 3 and of the bearing track 5. The suspension on rolling bearings allows stopping the rotor with extremely high moment of inertia in absolute integrity of the machine, constituting the safety system of the rotating machine itself. For the continuous operation at low energy dispersion the function of bearing the integral load is, on the other hand, exerted solely by the hydrostatic support.

Moreover, in conditions of failure, the cooling of the axial 7 and radial 16 emergency rolling bearings through the low-pressure pump 22 constitutes an additional safety element.

According to a further embodiment of the invention, the support device 100 could use non-magnetic oil. In this case, of course, it would not be necessary to have the magnetic ring 6 and possibly the rotating and floating plate 3 could also be made in a single piece, for example of stainless steel, only having to ensure anti-friction characteristics and not also magnetic properties.

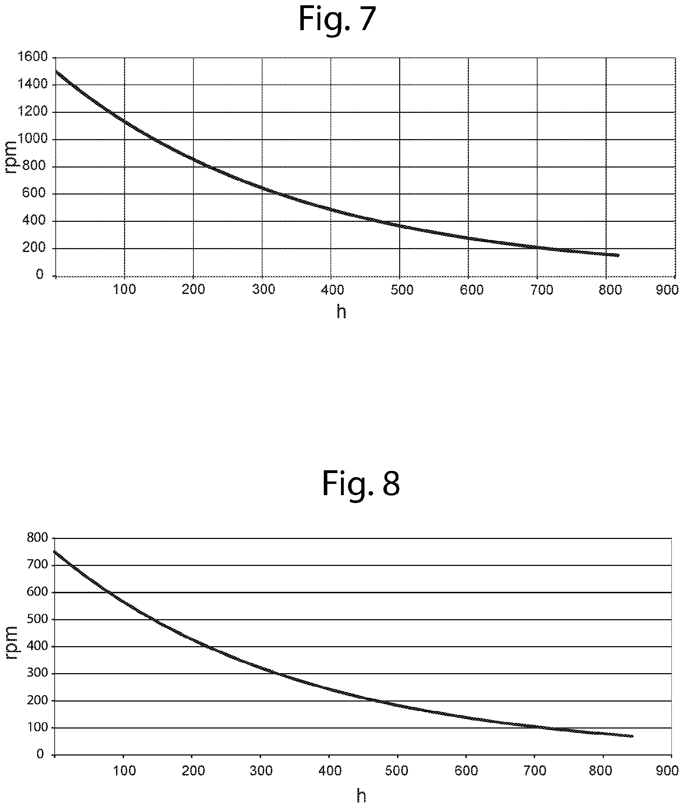

Figures 7-9 show the free descent diagrams of accumulators supported by the device 100 according to the present invention. The diagrams indicate the reduction of the speed (rpm) over time (hours) of the rotating shaft 1 of a rotor, not shown, having a substantial mass, in the examples comprised between 6 and 24 tons resting on the support device 100 of the invention.

The example I (figure 7) shows the descent graph of a rotor weighing 6 tons with 2.8 metres of diameter, starting from the initial conditions of 24 kWh at 1500 rpm. In the example I the device 100, which has the rotating and floating plate 3 having outer diameter dₑ equal to 60mm, is fed with a feed pressure of the high-pressure pump P₁ of 360 Bar. In this configuration, the time taken for the energy to halve is 125 hours at 1050 rpm.

Example II (figure 8) shows the geometric scaling of the rotor of example I taking the diameter of the rotor to 5.4 metres, halving the revolutions to 750 rpm and taking the mass to 24 tons with accumulated energy of 96 kWh. The device 100 in this example has the rotating and floating plate 3 made with a greater diameter with respect to that of example I, in particular equal to 120 mm in diameter, and it is fed with the same feed pressure as example I, equal to 360 Bars.

As a result the devices 100 of example I and of example II have the same specific friction force per unit surface.

Having a plate of 120 mm a contact surface 4 times greater than a plate of 60 mm and double the radius, the drag torque that results is 8 times greater whereas the revolutions of the rotor are half. Therefore, the power dissipated by the plate of 120 mm will be 4 times greater than that of 60 mm and it is thus scaled with the rotor of 24 kWh.

The free descent of the rotor of example II (rotor of 96Kwh) will thus be equal to that of the rotor of example I (rotor of 24 kWh).

The maximum power at the pump will, on the other hand, only be doubled because, for the same operating pressure, to keep the same height of oil separating film the circumferential outlet section of the plate of 120 mm is double that of 60 mm.

In this configuration, the time taken for the energy to halve is 120 hours at 530 rpm.

In example II there is a linear gain of the specific power of the oil-hydraulic pump P₁ necessary for bearing the rotor, indeed by quadrupling the accumulation capacity of the rotor the maximum flow rate of oil is doubled and not quadrupled.

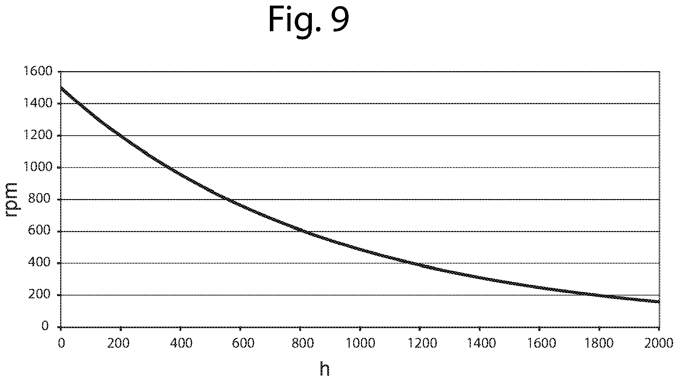

Example III (figure 9) shows the scaling of mass of a rotor of 96 kWh at 1500 rpm in which, with respect to example I (rotor of 24 kWh), the diameter is kept constant at 2.8 m, the mass of the rotor is taken from 6 to 24 tons and the diameter of the plate is kept constant at 60mm.

In this configuration, the time taken for the energy to halve is 300 hours at 1050 rpm.

In example III the operating pressure of the device 100 is 1440 Bar. For the same maximum flow rate, the power at the pump will be 4 times greater and thus scaled with the increase in accumulation capacity.

The power dissipated to the plate will be about 60% greater with respect to example I (rotor of 24 kWh) that will lead to an increase of the free descent times of about 2.5 times as can be seen from figure 9.

The vertical support device with reduced energy dissipation for rotating shafts according to the present invention has the advantage of making it possible to keep high rotating loads for very long time periods with dispersions and bearing powers of a few tens of watts.

The support device according to the invention, when applied to kinetic speed accumulation devices with flywheels, is advantageously capable of excellently solving the bearing function with low energy dispersion going into competition with other devices that use active magnetic bearing that is much more expensive to make and not suitable for very high values of the load.

Advantageously, the support device according to the invention at the same time makes both a hydrostatic bearing and a mechanical safety bearing.

The vertical support device with reduced energy dissipation for rotating shafts thus conceived can undergo numerous modifications and variants, all of which are covered by the invention; moreover, all of the details can be replaced by technically equivalent elements. In practice, the materials used, as well as the dimensions, can be whatever according to technical requirements.

## Claims

1. Vertical support device (100) with reduced energy dissipation for rotating shafts (1) comprising a spherical end portion (2) having radius (r), that is adapted to 5 be rigidly constrained to a rotating vertical shaft (1), coupled with a rotating and floating plate (3) bearing a hemispherical cap (4), which identifies a complementary concave seat having radius (r) for the spherical end portion (2), the support device (100) also comprising a bearing track (5) for bearing a load (K) that rests on the rotating and floating plate (3), wherein the rotating and floating plate (3), the hemispherical cap (4) and the bearing track (5) are arranged coaxial to a hollow housing body (9) and have an axial hole (33, 51) for the passage of pressurised feed oil for the hydrostatic bearing of the spherical end portion (2), an oil separating film being arranged between the conjugated (32, 52) of the rotating and floating plate (3) and of the bearing track (5), as well as between the hemispherical cap (4) and the spherical end portion (2), wherein the rotating and floating plate (3) has maximum outer radius (dₑ/2) greater than the radius of curvature (r) of the spherical end portion (2), the support device also comprising at least one hydraulic cooling circuit (20, 91) for cooling the bearing track (5).

2. Support device (100) according to claim 1, **characterised in that** the hemispherical cap (4) is provided with radial channels (34) on the concave surface for the passage and containment of pressurised lubrication oil, the radial channels (34) being arranged equally spaced from one another in a number generally comprised between 3 and 6.

3. Support device (100) according to any one of claims 1 or 2, **characterised in that** the rotating and floating plate (3) bears on the surface opposite the hemispherical cap (4) a shallow cavity (31) having diameter *dᵢ*, which determines the area of a rotation surface (32), consisting of the circular crown identified between the outer (*dₑ*) and inner (*dᵢ*) diameter of the rotating and floating plate (3).

4. Support device (100) according to any one of the previous claims, **characterised in that** the bearing track (5) on the surface opposite the rotating and floating plate (3) bears a magnetic ring (6), preferably made of neodymium ceramics, the device using a magnetic polarized oil.

5. Support device (100) according to any one of the previous claims, **characterised in that** the cooling circuit is made of a plurality of channels (91) giving rise to jets radially arranged in the housing body (9) towards the bearing track (5).

6. Support device (100) according to any one of the previous claims, **characterised in that** it comprises an auxiliary load bearing system with safety function below the hydrostatic bearing tracks (32, 52), comprising a perforated shaft (8) arranged between a delivery pipe (13) for the pressurised oil and the bearing track (5), axial (7) and radial (16) rolling bearings, wherein the radial rolling bearings (16) are arranged between the housing body (9) and the shaft (8) and wherein the axial rolling bearings (7) are arranged in the point of support between the bearing track (5) and the housing body (9).

7. Support device (100) according to claim 6, **characterised in that** the delivery pipe (13), which is fixed, is connected to the shaft (8), which has the possibility of rotation, with axial clearance by means of sealing gaskets arranged in series.

8. Support device (100) according to any one of the previous claims, **characterised in that** screws (15) with spherical end portions (17), preferably in a number between 3 and 6, are arranged equally spaced from one another, between a static base plate (19) and the hollow housing body (9).

9. Support device (100) according to any one of the previous claims, **characterised in that** it comprises two separate and distinct pumps (21, 22) in the oil circuit, of which a high-pressure pump (21) for hydrostatic bearing is connected to a circuit comprising an oil cooling/heating device (24) that takes the oil to the operating temperature (t_{H}), and a low pressure pump (22) for cooling the support device (100), connected to a circuit with ventilated air exchange cooling device (23) for the exchange of heat with the external environment.

10. Support device (100) according to claim 1, **characterised in that** the rotating and floating plate (3) is made through sintering technologies and is made of a composition by weight of: 64% Copper, 16% Tin, 12% Cadmium and 8% Nickel.

11. Support device (100) according to claim 1, **characterised in that** the bearing track (5) is made of a superalloy manufactured with so-called "mechanical alloying" technology and having a composition by weight of: 65% Iron, 18% Cobalt, 10% Chromium, 4% Silicon and 3% Tungsten.

## Patentansprüche

1. Vertikales Axiallager (100) mit reduziertem Energieverbrauch für rotierende Wellen (1), umfassend ein kugelförmiges Endteil (2), das einen Radius (r) aufweist, dazu geeignet, starr an eine rotierende vertikale Welle (1) befestigt zu werden, gekoppelt mit einer rotierenden und schwimmenden Platte (3), die eine halbkugelförmige Kalotte (4) trägt, die einen komplementären konkaven Sitz identifiziert, der einen Radius (r) für das kugelförmige Endteil (2) aufweist, wobei das Axiallager (100) ferner eine Lagerlaufbahn (5) zum Tragen einer Last (K) umfasst, die auf der rotierenden und schwimmenden Platte (3) aufliegt, wobei die rotierende und schwimmende Platte (3), die halbkugelförmige Kalotte (4) und die Lagerlaufbahn (5) koaxial zu einem hohlen Gehäusekörper (9) angeordnet sind und eine axiale Bohrung (33, 51) für den Durchgang von Druckzuführungsöl für die hydrostatische Lagerung des kugelförmigen Endteils (2) aufweisen, wobei ein Öltrennfilm zwischen den kombinierten Laufbahnen (32, 52) der rotierenden und schwimmenden Platte (3) und der Lagerlaufbahn (5) sowie zwischen der halbkugelförmigen Kalotte (4) und dem kugelförmigen Endteil (2) angeordnet ist, wobei die rotierende und schwimmende Platte (3) einen maximalen Außenradius (dₑ/2) aufweist, der größer ist als der Krümmungsradius (r) des kugelförmigen Endteils (2), wobei das Axiallager ferner mindestens einen hydraulischen Kühlkreislauf (20, 91) zur Kühlung der Lagerlaufbahn (5) umfasst.

2. Axiallager (100) gemäß Anspruch 1, **dadurch gekennzeichnet, dass** die halbkugelförmige Kalotte (4) an der konkaven Oberfläche mit radialen Kanälen (34) für den Durchgang und die Aufnahme von Druckschmieröl versehen ist, wobei die radialen Kanäle (34) in einer Anzahl, die im Allgemeinen zwischen 3 und 6 liegt, in gleichem Abstand voneinander angeordnet sind.

3. Axiallager (100) gemäß einem der Ansprüche 1 oder 2, **dadurch gekennzeichnet, dass** die rotierende und schwimmende Platte (3) auf der der halbkugelförmigen Kalotte (4) gegenüberliegenden Fläche einen flachen Hohlraum (31) hat, der den Durchmesser *dᵢ* aufweist, der die Fläche einer Rotationsfläche (32) bestimmt, die aus dem zwischen dem äußeren (dₑ) und dem inneren (*dᵢ*) Durchmesser der rotierenden und schwimmenden Platte (3) identifizierten kreisförmigen Kranz besteht.

4. Axiallager (100) gemäß einem der vorhergehenden Ansprüche, **dadurch gekennzeichnet, dass** die Lagerlaufbahn (5) auf der der rotierenden und schwimmenden Platte (3) gegenüberliegenden Fläche einen magnetischen Ring (6) trägt, der vorzugsweise aus Neodym-Keramik besteht, wobei die Vorrichtung ein magnetisch polarisiertes Öl verwendet.

5. Axiallager (100) gemäß einem der vorhergehenden Ansprüche, **dadurch gekennzeichnet, dass** der Kühlkreislauf aus einer Vielzahl von Kanälen (91) besteht, die Strahlen erzeugen, die radial im Gehäusekörper (9) in Richtung der Lagerlaufbahn (5) angeordnet sind.

6. Axiallager (100) gemäß einem der vorhergehenden Ansprüche, **dadurch gekennzeichnet, dass** es ein Hilfslastlagersystem mit Sicherheitsfunktion unterhalb der hydrostatischen Lagerlaufbahnen (32, 52) umfasst, das eine perforierte Welle (8), die zwischen einer Zufuhrleitung (13) für das Drucköl und der Lagerlaufbahn (5) angeordnet ist, Axial- (7) und Radialwälzlager (16) umfasst, wobei die Radialwälzlager (16) zwischen dem Gehäusekörper (9) und der Welle (8) angeordnet sind und wobei die Axialwälzlager (7) im Abstützpunkt zwischen der Lagerlaufbahn (5) und dem Gehäusekörper (9) angeordnet sind.

7. Axiallager (100) gemäß Anspruch 6, **dadurch gekennzeichnet, dass** die Zufuhrleitung (13), die feststehend ist, mit der Welle (8), die die Möglichkeit der Rotation aufweist, mit Axialspiel durch in Reihe angeordnete Dichtungen verbunden ist.

8. Axiallager (100) gemäß einem der vorhergehenden Ansprüche, **dadurch gekennzeichnet, dass** Schrauben (15) mit kugelförmigen Endteilen (17), vorzugsweise in einer Anzahl zwischen 3 und 6, in gleichem Abstand voneinander zwischen einer statischen Grundplatte (19) und dem hohlen Gehäusekörper (9) angeordnet sind.

9. Axiallager (100) gemäß einem der vorhergehenden Ansprüche, **dadurch gekennzeichnet, dass** es zwei getrennte und unterschiedliche Pumpen (21, 22) im Ölkreislauf umfasst, von denen eine Hochdruckpumpe (21) für die hydrostatische Lagerung mit einem Kreislauf verbunden ist, der eine Öl-Kühl-/Heizvorrichtung (24) umfasst, die das Öl auf die Betriebstemperatur (t_{H}) bringt, und eine Niederdruckpumpe (22) zur Kühlung des Axiallagers (100), verbunden mit einem Kreislauf mit belüftetem Luftaustauschkühler (23) für den Wärmeaustausch mit der äußeren Umgebung.

10. Axiallager (100) gemäß Anspruch 1, **dadurch gekennzeichnet, dass** die rotierende und schwimmende Platte (3) durch Sintertechnologien hergestellt ist und aus folgender Gewichtszusammensetzung besteht: 64 % Kupfer, 16 % Zinn, 12 % Cadmium und 8 % Nickel.

11. Axiallager (100) gemäß Anspruch 1, **dadurch gekennzeichnet, dass** die Lagerlaufbahn (5) aus einer Superlegierung besteht, die mit der so genannten Technologie des "mechanischen Legierens" hergestellt wurde und folgende Gewichtszusammensetzung aufweist: 65 % Eisen, 18 % Kobalt, 10 % Chrom, 4 % Silizium und 3 % Wolfram.

## Revendications

1. Dispositif de support vertical (100) à dissipation d'énergie réduite pour arbres rotatifs (1), comprenant une partie d'extrémité sphérique (2) ayant un rayon (r), qui est conçue pour être contrainte de manière rigide à un arbre vertical rotatif (1), couplée à une plaque rotative et flottante (3) portant un capuchon hémisphérique (4), qui identifie un siège concave complémentaire ayant un rayon (r) pour la partie d'extrémité sphérique (2), le dispositif de support (100) comprenant également une piste de palier (5) pour porter une charge (K) qui repose sur la plaque rotative et flottante (3), dans lequel la plaque rotative et flottante (3), le capuchon hémisphérique (4) et la piste de palier (5) sont agencés de manière coaxiale par rapport à un corps de boîtier creux (9) et possèdent un trou axial (33, 51) pour le passage d'huile d'alimentation sous pression pour le palier hydrostatique de la partie d'extrémité sphérique (2), un film de séparation d'huile étant agencé entre les pistes conjuguées (32, 52) de la plaque rotative et flottante (3) et de la piste de palier (5), ainsi qu'entre le capuchon hémisphérique (4) et la partie d'extrémité sphérique (2), dans lequel la plaque rotative et flottante (3) possède un rayon externe maximal (dₑ/2) supérieur au rayon de courbure (r) de la partie d'extrémité sphérique (2), le dispositif de support comprenant également au moins un circuit de refroidissement hydraulique (20, 91) pour refroidir la piste de palier (5).

2. Dispositif de support (100) selon la revendication 1, **caractérisé en ce que** le capuchon hémisphérique (4) est muni de canaux radiaux (34) sur la surface concave pour le passage et le confinement de l'huile de lubrification sous pression, les canaux radiaux (34) étant agencés en étant régulièrement espacés les uns des autres selon un nombre généralement compris entre 3 et 6.

3. Dispositif de support (100) selon l'une quelconque des revendications 1 ou 2, **caractérisé en ce que** la plaque rotative et flottante (3) porte, sur la surface opposée au capuchon hémisphérique (4), une cavité peu profonde (31) ayant un diamètre *dᵢ*, qui détermine l'aire d'une surface de rotation (32), constituée de la couronne circulaire identifiée entre le diamètre externe (*dₑ*) et interne (*dᵢ*) de la plaque rotative et flottante (3).

4. Dispositif de support (100) selon l'une quelconque des revendications précédentes, **caractérisé en ce que** la piste de palier (5) sur la surface opposée à la plaque rotative et flottante (3) porte une bague magnétique (6), de préférence constituée de céramique au néodyme, le dispositif utilisant une huile polarisée magnétique.

5. Dispositif de support (100) selon l'une quelconque des revendications précédentes, **caractérisé en ce que** le circuit de refroidissement est constitué d'une pluralité de canaux (91) donnant naissance à des jets radialement agencés dans le corps de boîtier (9) en direction de la piste de palier (5).

6. Dispositif de support (100) selon l'une quelconque des revendications précédentes, **caractérisé en ce qu'**il comprend un système de palier de charge auxiliaire à fonction de sécurité au-dessous des pistes de palier hydrostatique (32, 52), comprenant un arbre perforé (8) agencé entre un tuyau de distribution (13) pour l'huile sous pression et la piste de palier (5), des paliers à rouleaux axiaux (7) et radiaux (16), dans lequel les paliers à rouleaux radiaux (16) sont agencés entre le corps de boîtier (9) et l'arbre (8) et dans lequel les paliers à rouleaux axiaux (7) sont agencés au point de support entre la piste de palier (5) et le corps de boîtier (9).

7. Dispositif de support (100) selon la revendication 6, **caractérisé en ce que** le tuyau de distribution (13), qui est fixe, est raccordé à l'arbre (8), qui a la possibilité de tourner, avec un jeu axial au moyen de joints d'étanchéité agencés en séries.

8. Dispositif de support (100) selon l'une quelconque des revendications précédentes, **caractérisé en ce que** des vis (15) ayant des parties d'extrémité sphériques (17), de préférence selon un nombre compris entre 3 et 6, sont agencées en étant régulièrement espacées les unes des autres, entre une plaque de base statique (19) et le corps de boîtier creux (9).

9. Dispositif de support (100) selon l'une quelconque des revendications précédentes, **caractérisé en ce qu'**il comprend deux pompes séparées et distinctes (21, 22) dans le circuit d'huile, parmi lesquelles une pompe haute pression (21) pour palier hydrostatique est raccordée à un circuit comprenant un dispositif de refroidissement/chauffage d'huile (24) qui amène l'huile à la température de fonctionnement (t_{H}), et une pompe basse pression (22) pour refroidir le dispositif de support (100), raccordée à un circuit ayant un dispositif de refroidissement à échange d'air ventilé (23) pour l'échange de chaleur avec l'environnement externe.

10. Dispositif de support (100) selon la revendication 1, **caractérisé en ce que** la plaque rotative et flottante (3) est constituée par l'intermédiaire de technologies de frittage et est constituée d'une composition en poids de : 64 % de cuivre, 16 % d'étain, 12 % de cadmium et 8 % de nickel.

11. Dispositif de support (100) selon la revendication 1, **caractérisé en ce que** la piste de palier (5) est constituée d'un superalliage fabriqué avec une technologie dite « d'alliage mécanique » et ayant une composition en poids de : 65 % de fer, 18 % de cobalt, 10 % de chrome, 4 % de silicium et 3 % de tungstène.
